# EUROPEAN PATENT APPLICATION

(11) **EP 4 682 011 A1**
(43) Date of publication of application: **21.01.2026**
(21) Application number: 24917956.5
(22) Date of filing: 17.06.2024
(51) Int. Cl.: B61C 17/00, B60L 3/00

(54) **HIGH-VOLTAGE INTERLOCK DEVICE AND HIGH-VOLTAGE INTERLOCK METHOD FOR RAILWAY VEHICLE, AND RAILWAY VEHICLE**

(30) Priority: 15.01.2024 CN 202410056402
(71) Applicant: CRRC Changchun Railway Vehicles Co., Ltd., Changchun, Jilin 130000 (CN)
(72) Inventor: GUAN, Chao, Changchun, Jilin 130000 (CN); GAO, Dengke, Changchun, Jilin 130000 (CN); ZHUANG, Xi, Changchun, Jilin 130000 (CN); CHEN, Fu, Changchun, Jilin 130000 (CN)
(74) Representative: v. Bezold & Partner Patentanwälte - PartG mbB
(86) International application number: PCT/CN2024/099507
(87) International publication number: WO 2025/152341

(57) **Abstract**

A high-voltage interlock device and high-voltage interlock method for a railway vehicle, and a railway vehicle. When an electric grounding key on a cab fault switch panel of the high-voltage interlock device is rotated to a locked position, a first-stage electric grounding key is unlocked; when the electric grounding key is inserted into a pantograph-lifting pneumatic circuit interlock box, and a first three-way valve handle (t1) is rotated to a pneumatic circuit cut-off position, a second-stage pneumatic circuit key is unlocked; and when the second-stage pneumatic circuit key is inserted into a locking device (300) and rotated, a converter box key (c) and a power supply box key (d) are unlocked. The high-voltage interlock method for a railway vehicle is applied to the high-voltage interlock device of a railway vehicle; and the railway vehicle comprises the high-voltage interlock device. In the device, double locking of circuits and pneumatic circuits is performed on a pantograph, such that the pantograph can be prevented from being electrified during maintenance, a main circuit breaker is prevented from being closed, a pantograph pneumatic circuit is prevented from being lifted during maintenance, and thus the operation for maintenance staff members is simplified, and the safety level of operation is improved.

## Description

### CROSS-REFERENCE TO RELATED APPLICATION

The present invention claims the priority to the Chinese patent application with the filing No. 202410056402.7 filed with the Chinese Patent Office on January 15, 2024, and entitled "HIGH-VOLTAGE INTERLOCK DEVICE AND HIGH-VOLTAGE INTERLOCK METHOD FOR RAILWAY VEHICLE, AND RAILWAY VEHICLE", the contents of which are incorporated herein by reference in entirety.

### TECHNICAL FIELD

The present invention relates to the technical field of high-voltage protection for locomotives, and in particular, to a high-voltage interlock device and a high-voltage interlock method for a railway vehicle, and a railway vehicle.

### BACKGROUND ART

The high-voltage interlock protection system is an important part of the high-voltage safety protection system for railway vehicles, which is related to the personal safety of railway vehicle operators, and the protection and safe use of high-voltage equipment. In recent years, with more and more railway vehicles put into use, the high-voltage interlock protection system for railway vehicles has gradually become the focus of current work.

In the prior art, there are methods of locking the pantograph pneumatic circuit and locking the grounding switch separately; the first method is to first cut off the pantograph-raising pneumatic valve through the pneumatic circuit handle, and cut off the main circuit through the normally open contacts and normally closed contacts; secondly, locking the grounding switch; finally, taking out the safety key and opening the corresponding equipment. The second method is to first cut off the pantograph-raising pneumatic valve through the pneumatic circuit stop valve, then close the grounding switch of the pantograph-raising circuit, and finally, close the converter grounding switch to overhaul the converter and the power supply box. The third method is an interlock method using key A and key B in conjunction. Key A is in the open position under normal conditions. When it is turned to the left arm position, the pantograph-raising loop is disconnected due to the interlock on the circuit. After turning to the left arm position, key A can be pulled out. A grounding switch is equipped on the main circuit of the pantograph vehicle, and after inserting key A, by rotating the handle of the grounding switch by 180°, at this time, the main circuit is grounded. Even if there is a conducting high-voltage electricity, it can be discharged through the grounding switch, thus preventing harm to the vehicle and operators. After the grounding switch handle is rotated to 180°, key B can be pulled out at this point. Insert key B into the interlock box and rotate it so that the keyhole of the interlock box is aligned. This allows operators to conduct non-electrified operations with the padlock applied. During the operation, key A and key B cannot be pulled out, the grounding switch cannot be reset, and the circuit is interlocked, so the pantograph cannot be lifted. After the non-electrified operation is completed, the pantograph can be lifted again for a power supply after unlocking. However, the existing keys A and B require manual closing of the grounding switch and opening of the top plate. For the electric grounding switches on the latest trains, the operation of rotating keys A and B by 180° is not required. In conclusion, the interlock logic and structure of the three methods in the prior art cannot be applied to the new train structure and operation requirements.

### SUMMARY

In view of this, the objective of the present invention is to provide a high-voltage interlock device for railway vehicles, a high-voltage interlock method for the device, and a railway vehicle. Firstly, the pantograph-raising circuit of the pantograph and the main circuit breaker are cut off simultaneously through the electric grounding key switch, and the grounding switch is grounded; secondly, the pantograph-raising pneumatic circuit is cut off; finally, the safety key is taken out, and the corresponding equipment is opened for non-electrified operation. Through this method, the problem that the interlock logic or structure in the prior art cannot adapt to the electric grounding switch of the train can be solved.

In the first aspect, a high-voltage interlock device for railway vehicles is provided in the present invention, including: a first cab fault switch panel, a second cab fault switch panel, a first pantograph-raising pneumatic circuit interlock box, a second pantograph-raising pneumatic circuit interlock box, and a locking device.

The first cab fault switch panel is interlocked with the first pantograph-raising pneumatic circuit interlock box, the second cab fault switch panel is interlocked with the second pantograph-raising pneumatic circuit interlock box, and the first pantograph-raising pneumatic circuit interlock box and the second pantograph-raising pneumatic circuit interlock box jointly interlock the locking device.

The first electric grounding key on the first cab fault switch panel is turned to the lock position, so as to unlock the first electric grounding key; and the second electric grounding key on the second cab fault switch panel is turned to the lock position, so as to unlock the second electric grounding key.

The first electric grounding key is inserted into the first pantograph-raising pneumatic circuit interlock box, and the first three-way valve handle on the first pantograph-raising pneumatic circuit interlock box is rotated to the pneumatic circuit cut-off position, so as to unlock the first pneumatic circuit key. The second electric grounding key is inserted into the second pantograph-raising pneumatic circuit interlock box, and the second three-way valve handle on the second pantograph-raising pneumatic circuit interlock box is rotated to the pneumatic circuit cut-off position, so as to unlock the second pneumatic circuit key.

The first pneumatic circuit key and the second pneumatic circuit key are inserted into the locking device at the same time and rotated to the maintenance position, so that the converter box key and the power supply box key can be unlocked.

Further, a first electric grounding key lock cylinder is arranged on the first pantograph-raising pneumatic circuit interlock box, and the first electric grounding key corresponds to the first electric grounding key lock cylinder; a second electric grounding key lock cylinder is arranged on the second pantograph-raising pneumatic circuit interlock box, and the second electric grounding key corresponds to the second electric grounding key lock cylinder.

A first pneumatic circuit lock cylinder is arranged on the first pantograph-raising pneumatic circuit interlock box, and the first pneumatic circuit key corresponds to the first pneumatic circuit lock cylinder; a second pneumatic circuit lock cylinder is arranged on the second pantograph-raising pneumatic circuit interlock box, and the second pneumatic circuit key corresponds to the second pneumatic circuit lock cylinder.

A first three-way valve corresponding to the first three-way valve handle is arranged on the first pantograph-raising pneumatic circuit interlock box, and a second three-way valve corresponding to the second three-way valve handle is arranged on the second pantograph-raising pneumatic circuit interlock box.

Further, the locking device is provided with a first pneumatic circuit lock cylinder, a second pneumatic circuit lock cylinder, a plurality of converter box lock cylinders, a plurality of converter box keys corresponding to the plurality of converter box lock cylinders, a plurality of power supply box lock cylinders, and a plurality of power supply box keys corresponding to the plurality of power supply box lock cylinders.

Further, the contacts of the first electric grounding key are respectively connected to the closing circuit of the first grounding switch, the power supply circuit of the first pantograph and the closing circuit of the first high-voltage circuit breaker; the contacts of the second electric grounding key are respectively connected to the closing circuit of the second grounding switch, the power supply circuit of the second pantograph and the closing circuit of the second high-voltage circuit breaker.

Further, the first electric grounding key, the second electric grounding key, the first pneumatic circuit key, the second pneumatic circuit key, the converter box keys and the power supply box keys are set to different colors, and the first electric grounding key and the second electric grounding key are of the same color, the first pneumatic circuit key and the second pneumatic circuit key are of the same color, the plurality of converter box keys are of the same color, and the plurality of power supply box keys are of the same color.

In the second aspect, a high-voltage interlock method for railway vehicles is further provided in the present invention, and the method is applied to the above-mentioned high-voltage interlock device for railway vehicles, including the following steps:
S1: turning the electric grounding key switch on the cab fault switch panel to the lock position, so as to close the grounding switch, cut off the pantograph power supply circuit and the main circuit breaker circuit, ensuring that the electric grounding key switch is pulled out;
S2: turning the three-way valve handle of the pantograph pneumatic circuit interlock box to the pneumatic circuit cut-off position, so as to cut off the pantograph air supply circuit, ensuring that the pneumatic circuit key is pulled out; and
S3: unlocking through the key of the locking device, ensuring that the keys of the converter box and the power supply box are pulled out.

Further, the S1 includes:
rotating the first electric grounding key and the second electric grounding key to the lock position, so that both the first grounding switch and the second grounding switch are closed, the power supply circuits of the first pantograph and the second pantograph are both disconnected, and the circuits of the first high-voltage circuit breaker and the second high-voltage circuit breaker are both disconnected; and
pulling out the first electric grounding key and the second electric grounding key.

Further, the S2 includes:
inserting the first electric grounding key and the second electric grounding key into the first electric grounding key lock cylinder and the second electric grounding key lock cylinder, respectively;
rotating both the first three-way valve handle and the second three-way valve handle to the pneumatic circuit cut-off position, so that the air supply circuits of the first pantograph and the second pantograph are disconnected; and
pulling out the first pneumatic circuit key and the second pneumatic circuit key.

Further, the S3 includes:
inserting the first pneumatic circuit key into the first pneumatic circuit lock cylinder, and inserting the second pneumatic circuit key into the second pneumatic circuit lock cylinder at the same time; pulling out the converter box key and the power supply box key.

In the third aspect, a railway vehicle is further provided in the present invention, including the above-mentioned high-voltage interlock device for railway vehicles.

Compared with the prior art, the high-voltage interlock device for railway vehicles provided by the present invention locks the circuit of the pantograph through the circuit, so as to prevent the pantograph from being electrified during maintenance while disconnecting the main circuit breaker circuit; turns the three-way valve handle to the pneumatic circuit cut-off position, so as to cut off the air supply circuit of the pantograph, preventing the pantograph pneumatic circuit from lifting during maintenance. Through the double locking of the circuit and pneumatic circuit of the pantograph, and through the setting of the contacts of the electric grounding switch, when the electric grounding switch is rotated to the lock position, the pantograph lifting circuit is disconnected, the main circuit breaker of the train high-voltage circuit is disconnected, and the grounding switch is closed simultaneously. This device simplifies the operation of maintenance personnel and improves the safety level of non-electrified operations.

In order to make the above objectives, features and advantages of the present invention more obvious and easier to understand, the following is a detailed description of preferred examples with the attached drawings.

### BRIEF DESCRIPTION OF THE DRAWINGS

In order to more clearly illustrate the technical solutions of examples in the present invention, the drawing to be used in examples will be briefly introduced below. It should be understood that the following drawing only shows some examples of the present invention, so they should not be regarded as limiting the scope, for a person of ordinary skill in the art, other drawings can be obtained according to the drawing without inventive efforts.
FIG. 1 shows the logic structure diagram of the high-voltage interlock device for railway vehicles provided by the present invention.
FIG. 2 shows the structure diagram of the first pantograph-raising pneumatic circuit interlock box provided by the present invention.
FIG. 3 shows the gear structure diagram of the first electric grounding key lock cylinder provided by the present invention.
FIG. 4 shows the structure diagram of the contact assembly provided by the present invention.
FIG. 5 shows the contact logic function diagram provided by the present invention.
FIG. 6 shows the structural schematic diagram of the power supply unit operation module of the high-voltage interlock device for railway vehicles provided by the present invention.

Reference numbers: 100-high-voltage interlock device; 101-first cab fault switch panel; 102-second cab fault switch panel; 201-first pantograph-raising pneumatic circuit interlock box; 202-second pantograph-raising pneumatic circuit interlock box; 300-locking device; A1-first electric grounding key lock cylinder; a1-first electric grounding key; B1-first pneumatic circuit lock cylinder; b1-first pneumatic circuit key; T1-first three-way valve; t1-first three-way valve handle; A2-second electric grounding key lock cylinder; a2-second electric grounding key; B2-second pneumatic circuit lock cylinder; b2-second pneumatic circuit key; T2-second three-way valve; t2-second three-way valve handle; C-traction converter lock cylinder; D-power supply box lock cylinder; c-converter box key; d-power supply box key; K1-first electric grounding switch contact; K2-first emergency power-off loop relay; K3-second electric grounding switch contact; K4-second emergency power-off loop relay; G1-first grounding switch; G2-second grounding switch; E1-first main circuit breaker; E2-second main circuit breaker; F1-first pantograph; F2-second pantograph; O-open position; S-closed position; L-lock position; 103-contact assembly; 2011-first three-way valve state diagram; 2012-normally open-normally closed contact switch; x1-first air outlet; j1-first air inlet; p1-first air exhaust port; x2-second air outlet; j2-second air inlet; p2-second air exhaust port.

### DETAILED DESCRIPTION OF EMBODIMENTS

The following specific embodiments are provided to assist the reader in obtaining a comprehensive understanding of the methods, devices, and/or systems described herein. However, various changes, modifications, and equivalents of the methods, devices, and/or systems described herein will be obvious after understanding the disclosure of the present invention. For example, the order of operations described herein is merely an example and is not limited to the order set forth herein, but rather, except for operations that must occur in a specific order, changes that will be obvious after understanding the disclosure of the present invention may be made. Furthermore, descriptions of features known in the art can be omitted for the sake of clarity and conciseness.

The features described herein can be embodied in different forms and should not be construed as being limited to the examples described herein. Rather, the examples described herein have been provided merely to illustrate some of the many possible ways of implementing the methods, devices, and/or systems described herein that can be obvious after understanding the disclosure of the present invention.

Throughout the specification, when an element (such as a layer, region, or substrate) is described as being "on", "connected to", "bonded to", "over", or "covering" another element, it can be directly "on", "connected to", "bonded to", "over", or "covering" the other element, or one or more other elements can be present therebetween. In contrast, when an element is described as being "directly on", "directly connected to", "directly bonded to", "directly over", or "directly covering" another element, no other elements can be present therebetween.

As used herein, the term "and/or" includes any one of the listed related items and any combination of any two or more of them.

Although terms such as "first", "second", and "third" can be used herein to describe various members, components, regions, layers, or portions, these members, components, regions, layers, or portions are not limited by these terms. Rather, these terms are only used to distinguish one member, component, region, layer, or portion from another member, component, region, layer, or portion. Thus, a first member, component, region, layer, or portion referred to in the examples described herein could also be termed a second member, component, region, layer, or portion without departing from the teachings of the examples.

For ease of description, spatial relational terms such as "above", "upper part", "below", and "lower part" can be used herein to describe the relationship of one element to another element as shown in the drawings. Such spatial relational terms are intended to encompass different orientations of the device in use or operation in addition to the orientation depicted in the drawings. For example, if the device in the drawings is turned over, elements described as being "above" or "upper part" relative to another element can then be oriented "below" or "lower part" relative to the other element. Thus, the term "above" includes both orientations of "above" and "below" depending on the spatial orientation of the device. The device can further be positioned in other ways (e.g., rotated 90 degrees or at other orientations), and the spatial relational terms used herein can be interpreted accordingly.

The terms used herein are for describing various examples only and are not intended to limit the examples. Unless the context clearly indicates otherwise, singular forms are further intended to include plural forms. The terms "comprise", "include" and "having" enumerate the presence of stated features, numbers, operations, members, elements, and/or combinations thereof, but do not exclude the presence or addition of one or more other features, numbers, operations, members, elements, and/or combinations thereof.

Variations in the shapes shown in the drawings can occur due to manufacturing techniques and/or tolerances. Thus, the examples described herein are not limited to the specific shapes shown in the drawings but include changes in shape that occur during manufacturing.

The technical solutions in the examples of the present invention will be described clearly and completely below in conjunction with the accompanying drawings of the present invention. Obviously, the described example is only a part of the examples of the present invention, but not the whole examples. Based on the examples in the present invention, all other examples obtained by those skilled in the art without inventive work belong to the protection scope of the present invention.

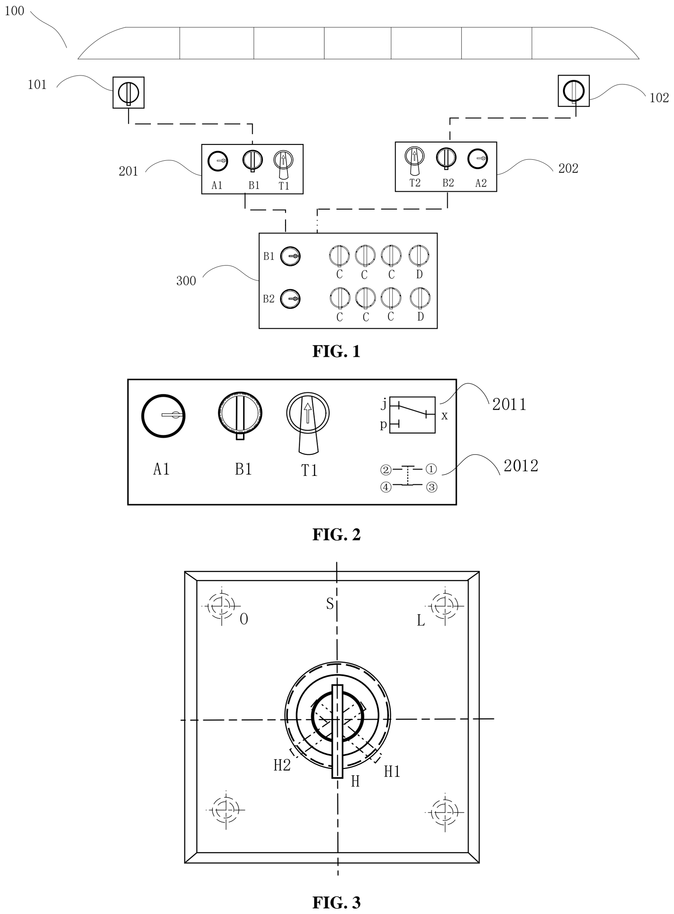

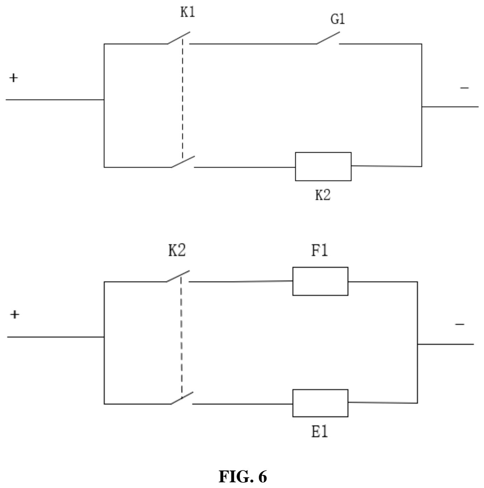

The examples of the present invention are described below with reference to FIG. 1 to FIG. 6.

As shown in FIG. 1, a high-voltage interlock device 100 for railway vehicles is provided in the present invention, wherein the high voltage of the present invention is applicable to the voltage level of railway vehicles such as high-speed railways, subways, and trains. The high-voltage interlock device includes a first cab fault switch panel 101, a second cab fault switch panel 102, a first pantograph-raising pneumatic circuit interlock box 201, a second pantograph-raising pneumatic circuit interlock box 202, and a locking device 300. The first cab fault switch panel 101 is interlocked with the first pantograph-raising pneumatic circuit interlock box 201, the second cab fault switch panel 102 is interlocked with the second pantograph-raising pneumatic circuit interlock box 202, and the first pantograph-raising pneumatic circuit interlock box 201 and the second pantograph-raising pneumatic circuit interlock box 202 jointly interlock the locking device 300, so as to realize three-stage key interlock. The interlock in the present example refers to the step-by-step continuous locking in the time sequence of the three-stage key interlock system.

Firstly, the first electric grounding key a1 on the first cab fault switch panel 101 is turned to the lock position, so as to unlock the first electric grounding key a1; the second electric grounding key a2 on the second cab fault switch panel 102 is turned to the lock position, so as to unlock the second electric grounding key a2. Secondly, the first electric grounding key a1 is inserted into the first pantograph-raising pneumatic circuit interlock box 201, and the first three-way valve handle t1 on the first pantograph-raising pneumatic circuit interlock box 201 is rotated to the pneumatic circuit cut-off position, so as to unlock the first pneumatic circuit key b1; the second electric grounding key a2 is inserted into the second pantograph-raising pneumatic circuit interlock box 202, and the second three-way valve handle t2 on the second pantograph-raising pneumatic circuit interlock box 202 is rotated to the pneumatic circuit cut-off position, so as to unlock the second pneumatic circuit key b2. Finally, the first pneumatic circuit key b1 and the second pneumatic circuit key b2 are inserted into the locking device 300 at the same time and rotated to the maintenance position, so that the converter box key c and the power supply box key d can be unlocked.

Specifically, in the present example, the contacts of the key switch are respectively connected in series into the three-stage interlock circuit, and the first electric grounding switch contact K1 and the second electric grounding switch contact K3 (not shown in the figure) are respectively rotated to the lock position, at this point, the first electric grounding key a1 and the second electric grounding key a2 can be taken out. At the moment when the electric grounding key switch is turned to the lock position, the pantograph lifting circuit is disconnected and the main circuit breaker circuit is disconnected; after a delay, the grounding switches G1 and G2 are closed. Preferably, the number of switch contacts of the above-mentioned first electric grounding key a1 and second electric grounding key a2 can be designed according to actual project requirements.

In the present invention, by using the first-stage key of the first-stage cab fault switch panel to perform the first-stage high-voltage circuit disconnection locking and grounding switch closing; at the second stage, on the pantograph-raising pneumatic circuit interlock box, by using the first-stage key and the three-way valve handle to cut off the air supply circuit of the pantograph, the pneumatic circuit can be locked; at the third stage, by using the second-stage key to lock the locking device, safe maintenance is realized. The order of the three-stage key locking in the present example is non-interchangeable.

The first cab fault switch panel 101 of the present invention is configured to control the on-off of the first pantograph power supply circuit, the first high-voltage circuit breaker circuit and the first grounding switch circuit; the second cab fault switch panel 102 is configured to control the on-off of the second pantograph power supply circuit, the second high-voltage circuit breaker circuit and the second grounding switch circuit. The first pantograph-raising pneumatic circuit interlock box 201 and the second pantograph-raising pneumatic circuit interlock box 202 are respectively configured to control the on-off of the air supply circuits of the first pantograph F1 and the second pantograph F2 of the railway vehicle. The locking device 300 is configured to control the opening and closing of the traction converter box, auxiliary converter box and power supply box of the railway vehicle.

The first pantograph-raising pneumatic circuit interlock box 201 and the second pantograph-raising pneumatic circuit interlock box 202 of the present invention are located in the pantograph carriage of the vehicle. The specific pantograph carriage is set according to actual production and use, and the first pantograph-raising pneumatic circuit interlock box 201 and the second pantograph-raising pneumatic circuit interlock box 202 can be set in any carriage with accommodating space.

The first pantograph-raising pneumatic circuit interlock box 201 of the present invention is provided with a first electric grounding key lock cylinder A1, a first pneumatic circuit lock cylinder B1, a first pneumatic circuit key b1, a first three-way valve T1, and a first three-way valve handle t1. The second pantograph-raising pneumatic circuit interlock box 202 is provided with a second electric grounding key lock cylinder A2, a second pneumatic circuit lock cylinder B2, a second pneumatic circuit key b2, a second three-way valve T2, and a second three-way valve handle t2. The first pneumatic circuit key b1 corresponds to the first pneumatic circuit lock cylinder B1, and the second pneumatic circuit key b2 corresponds to the second pneumatic circuit lock cylinder B2.

The first three-way valve handle t1 controls the first three-way valve T1 correspondingly. As shown in the first three-way valve state diagram 2011 in the first pantograph-raising pneumatic circuit interlock box 201 of FIG. 2, it has a first air outlet x1, a first air inlet j1 and a first air exhaust port p1. The first air outlet x1 is connected to the first pantograph, the first air inlet j1 is connected to the first air inlet pneumatic circuit, the first air exhaust port p1 is connected to the first air exhaust pneumatic circuit, and the first three-way valve T1 is respectively connected to the first air inlet j1, the first air outlet x1 and the first air exhaust port p1 of the vehicle. The second three-way valve handle t2 controls the second three-way valve T2 correspondingly, and it also has an air outlet x2, an air inlet j2 and an air exhaust port p2. The air outlet x2 is connected to the second pantograph, the air inlet j2 is connected to the second air inlet pneumatic circuit, the air exhaust port p2 is connected to the second air exhaust pneumatic circuit, and the second three-way valve T2 is respectively connected to the second air inlet j2, the second air outlet x2 and the second air exhaust port p2 of the vehicle. Inserting the first electric grounding key a1 into the first electric grounding key lock cylinder A1 correspondingly, operating the first three-way valve handle t1 to switch to the pneumatic circuit cut-off position, and then the first pneumatic circuit key b1 can be taken out. The situation of the second three-way valve T2 is the same as that of the first three-way valve T1, inserting the second electric grounding key a2 into the second electric grounding key lock cylinder A2 correspondingly, operating the second three-way valve handle t2 to switch to the pneumatic circuit cut-off position, and then the second pneumatic circuit key b2 can be taken out.

In addition, the first pantograph-raising pneumatic circuit interlock box 201 is further provided with a first auxiliary switch, a first interlock mechanism, a first connector, and two pairs of normally open and normally closed contact switches 2012. The first auxiliary switch, the first interlock mechanism, the first connector, two pairs of normally open and normally closed contacts are arranged to feed back the state of the pantograph-raising pneumatic circuit to the vehicle network, and have no substantial effect on the key of the electric grounding switch.

The locking device 300 of the present invention is provided with a first pneumatic circuit lock cylinder B1, a second pneumatic circuit lock cylinder B2, a plurality of converter box lock cylinders C, a plurality of converter box keys c, a plurality of power supply box lock cylinders D, and a plurality of power supply box keys d, wherein the converter box lock cylinders C correspond to the high-voltage box door of the traction converter and the high-voltage box door of the auxiliary converter respectively, the converter box keys c correspond to the traction converter box door lock cylinders C, and the power supply box key d correspond to the power supply box door lock cylinders D. In the embodiment of the present invention, 6 converter box lock cylinders C and 6 converter box keys c are provided. Preferably, 4 traction converter lock cylinders C and 4 corresponding keys c can be arranged, and 2 auxiliary converter lock cylinders and 2 corresponding keys can be arranged; 2 power supply box lock cylinders D and 2 power supply box keys d are provided. In other examples, 8 (tentative) C lock cylinders for traction converters, 4 (tentative) C lock cylinders for auxiliary converters, and 1 D lock cylinder for each external power supply box can further be arranged. However, in practical application, the number of converter box lock cylinders C, converter box keys c, power supply box lock cylinders D, and power supply box keys d can be increased or decreased adaptively.

Inserting the first pneumatic circuit key b1 and the second pneumatic circuit key b2 into the first pneumatic circuit lock cylinder B1 and the second pneumatic circuit lock cylinder B2 on the locking device 300 at the same time and rotating them to the lock position, then the converter box keys c and power supply box keys d for corresponding maintenance can be pulled out, so as to realize locking; after that, the corresponding equipment compartment doors can be opened. Reliable protective covers are arranged at the lock cylinders of the equipment compartments under the vehicle, which play a sealing role and are easy to operate at the same time.

The first electric grounding switch contact K1 is respectively connected to the closing circuit of the first grounding switch G1, the power supply circuit of the first pantograph F1, and the closing circuit of the first main circuit breaker E1; the contacts of the second electric grounding key a2 are respectively connected to the closing circuit of the second grounding switch G2, the power supply circuit of the second pantograph F2, and the closing circuit of the second main circuit breaker E2.

Specifically, as shown in FIG. 2, the first electric grounding switch contact K1 is connected to the closing circuit of the first grounding switch G1 and simultaneously connected to the circuit of the first emergency power-off loop relay K2; the circuit of the first emergency power-off loop relay K2 includes the circuit of the first main circuit breaker E1 and the circuit of the first pantograph F1. Similarly, the second electric grounding switch contact K3 is connected to the closing circuit of the second grounding switch G2 and simultaneously connected to the circuit of the second emergency power-off loop relay K4; the circuit of the second emergency power-off loop relay K4 includes the circuit of the second main circuit breaker E2 and the circuit of the second pantograph F2. By rotating the first electric grounding switch contact K1 to the closed position, the first grounding switch G1 is closed, so as to realize safe grounding; then switching the first emergency power-off loop relay K2 to the open position, so that the circuit of the first main circuit breaker E1 and the circuit of the first pantograph F1 are de-energized, and the first pantograph F1 undergoes power-off and lowering. In the same way, by rotating the second electric grounding switch contact K3 to the closed position, the second grounding switch G2 is closed, so as to realize safe grounding; then switching the second emergency power-off loop relay K4 to the open position, so that the circuit of the second main circuit breaker E2 and the circuit of the second pantograph F2 are de-energized, and the second pantograph F2 undergoes power-off and lowering. In this way, maintenance technicians can perform safe operations in a safe non-electrified environment.

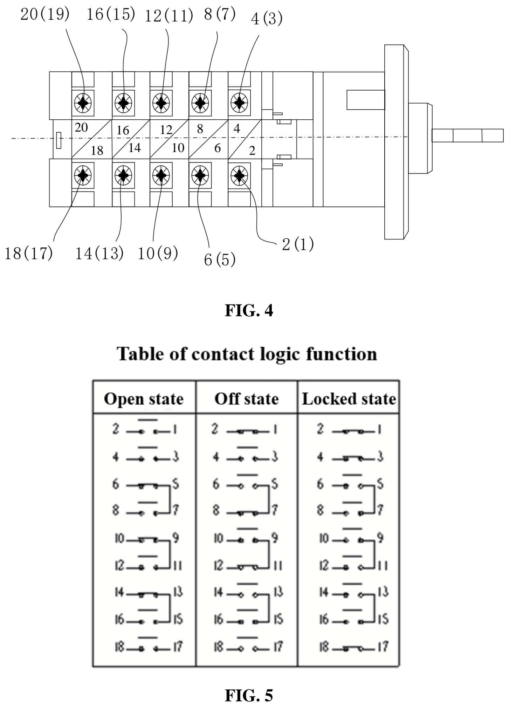

The gear structure of the first electric grounding key lock cylinder A1 of the present invention is shown in FIG. 3. The electric grounding key lock cylinder is equipped with open, closed, and lock positions, with the closed position S located between the open position O and the lock position L. At the center of the lock cylinder is a keyhole H for inserting the electric grounding key, and this position is the closed position; a rotation position H1 is further set for the open position O; and a rotation position H2 is further provided for the lock position L. After inserting the first electric grounding key a1 into the keyhole H at the center of the lock cylinder, rotating it to the left switches it to the open position O, and rotating it to the right switches it to the lock position L. The first electric grounding key lock cylinder A1 is connected to the contact assembly 103 that realizes the signal feedback of open, off, and locked states, and the contact assembly 103 is shown in FIG. 4. The open position O is the normal position signal, the lock position L is the maintenance position signal, and the closed position S is the signal switching position, which switches the normal position signal to the maintenance position signal. When the first electric grounding key a1 is in the open position O, the unit works normally; when the first electric grounding key a1 is in the closed position S, the unit is shut down; and when the first electric grounding key a1 is in the lock position L, the unit needs to be maintained. Based on the above design, the first electric grounding key a1 can only be pulled out when switched to the lock position L, for the subsequent linkage of the first pantograph-raising pneumatic circuit interlock box 201 and the locking device 300; otherwise, the first pantograph-raising pneumatic circuit interlock box 201 and the locking device 300 cannot switch or be used normally.

As shown in FIG. 4, in the example of the present invention, the contact assembly 103 is equipped with a total of 10 groups of contacts, divided into two types: normally open contacts and 2 pairs of normally open-normally closed contacts. Among them, 2(1), 4(3), 18(17), and 20(19) are normally open contacts; 6(5) and 8(7), 10(9) and 12(11), and 14(13) and 16(15) form two pairs of normally open-normally closed contacts. The logic functions of the 10 groups of contacts are shown in FIG. 5, including open state, off state, and locked state. In other examples, the specific number of contacts can be increased or decreased according to actual project requirements.

The gear structure and contact settings of the second electric grounding key lock cylinder A2 are the same as those of the first electric grounding key lock cylinder A1.

In the present invention, the first electric grounding key a1, the second electric grounding key a2, the first pneumatic circuit key b1, the second pneumatic circuit key b2, the converter box key c, and the power supply box key d are set to different colors, and the first electric grounding key a1 and the second electric grounding key a2 are of the same color, which is blue in the present example; in other examples, other colors except blue can further be set. The first pneumatic circuit key b1 and the second pneumatic circuit key b2 are of the same color, which is yellow in the present example; in other examples, other colors except yellow can further be set. The plurality of converter box keys c are of the same color, which is green in the present example; in other examples, other colors except green can further be set. The plurality of power supply box keys d are of the same color, which is black in the present example; in other examples, other colors except black can further be set.

In the present invention, the existing electric grounding switch is transformed into a mature product used in existing electric multiple unit trains, and the wiring mode is adaptively modified; a pantograph-raising pneumatic circuit interlock box is added and installed in the pneumatic circuit at the front end of the pantograph-raising valve plate, with the pantograph-raising pneumatic circuit interlock box installed and the air duct adaptively modified; the newly added locking device 300 is installed in the electrical cabinet where no equipment is installed in the train set; the box doors of the loaded traction and auxiliary converter, and external power supply box are further modified, and the converter box C lock cylinder and power supply box D lock cylinder are installed.

In the present invention, through the setting of the contacts of the electric grounding switch, when the electric grounding switch is rotated to the lock position, the following are realized simultaneously: the pantograph lifting circuit is disconnected, the main circuit breaker of the train high-voltage circuit is disconnected, and the grounding switch is closed. The double locking of the circuit and pneumatic circuit of the pantograph can prevent the pantograph from being electrified during maintenance, and prevent the main circuit breaker from closing at the same time; prevent the pantograph pneumatic circuit from lifting during maintenance, thus simplifying the operation of maintenance personnel, and improving the safety level of operations.

A high-voltage interlock method for railway vehicles is further provided in the present invention, and the method is applied to the above-mentioned high-voltage interlock device 100 for railway vehicles of the present invention, including the following steps.

Step S1: the pantograph power supply circuit and the entire vehicle high-voltage circuit are disconnected through the cab fault switch panel, so that the grounding switch is closed. The specific operation is as follows: the first electric grounding key a1 and the second electric grounding key a2 are rotated to the lock position, so that both the first grounding switch solenoid valve G1 and the second grounding switch solenoid valve G2 are closed, the power supply circuits of the first pantograph F1 and the second pantograph F2 are both disconnected, and the circuits of the first high-voltage circuit breaker E1 and the second high-voltage circuit breaker E2 are both disconnected. The first electric grounding key a1 and the second electric grounding key a2 are pulled out.

Step S2: the pantograph air supply circuit is disconnected through the pantograph-raising pneumatic circuit interlock box. The specific operation is as follows: the first electric grounding key a1 and the second electric grounding key a2 are inserted into the first electric grounding key lock cylinder A1 and the second electric grounding key lock cylinder A2 respectively; both the first three-way valve handle t1 and the second three-way valve handle t2 are rotated to the pneumatic circuit cut-off position, so that the air supply circuits of the first pantograph F1 and the second pantograph F2 are disconnected. The first pneumatic circuit key b1 and the second pneumatic circuit key b2 are pulled out.

Step S3: the converter box and the power supply box are unlocked through the key of the locking device 300. The specific operation is as follows: the first pneumatic circuit key b1 and the second pneumatic circuit key b2 are inserted into the first pneumatic circuit lock cylinder B1 and the second pneumatic circuit lock cylinder B2 respectively, and the converter box key c and the power supply box key d are pulled out.

The method of the present example can be highly applicable to the high-voltage interlock device, which can ensure the standardization and normalization of the operation of the high-voltage interlock system, so as to ensure the personal safety of operators during train maintenance.

A railway vehicle is further provided in the present invention, including the above-mentioned high-voltage interlock device 100 for railway vehicles of the present invention.

Finally, it should be noted that the above-described examples are merely specific implementations of the present invention, which are used to illustrate the technical solutions of the present invention rather than limit it. The protection scope of the present invention is not limited thereto. Although the present invention has been described in detail with reference to the foregoing examples, those of ordinary skill in the art should understand that any person skilled in the technical field can still modify the technical solutions recorded in the foregoing examples, easily conceive of changes, or equivalently replace some of the technical features within the technical scope disclosed by the present invention; and such modifications, changes, or replacements do not make the essence of the corresponding technical solutions deviate from the spirit and scope of the technical solutions of the examples of the present invention, and all shall be covered within the protection scope of the present invention. Therefore, the protection scope of the present invention should be subject to the protection scope of the claims.

## Claims

1. A high-voltage interlock device for a railway vehicle, **characterized by** comprising: a first cab fault switch panel, a second cab fault switch panel, a first pantograph-raising pneumatic circuit interlock box, a second pantograph-raising pneumatic circuit interlock box, and a locking device, wherein
the first cab fault switch panel is interlocked with the first pantograph-raising pneumatic circuit interlock box, the second cab fault switch panel is interlocked with the second pantograph-raising pneumatic circuit interlock box, and the first pantograph-raising pneumatic circuit interlock box and the second pantograph-raising pneumatic circuit interlock box jointly interlock the locking device;
a first electric grounding key on the first cab fault switch panel is turned to a lock position, so as to unlock the first electric grounding key; and a second electric grounding key on the second cab fault switch panel is turned to the lock position, so as to unlock the second electric grounding key;
the first electric grounding key is inserted into the first pantograph-raising pneumatic circuit interlock box, and a first three-way valve handle on the first pantograph-raising pneumatic circuit interlock box is rotated to a pneumatic circuit cut-off position, so as to unlock a first pneumatic circuit key; the second electric grounding key is inserted into the second pantograph-raising pneumatic circuit interlock box, and a second three-way valve handle on the second pantograph-raising pneumatic circuit interlock box is rotated to the pneumatic circuit cut-off position, so as to unlock a second pneumatic circuit key; and
the first pneumatic circuit key and the second pneumatic circuit key are inserted into the locking device at the same time and rotated to a maintenance position, so that a converter box key and a power supply box key can be unlocked.

2. The high-voltage interlock device for the railway vehicle according to claim 1, wherein a first electric grounding key lock cylinder is arranged on the first pantograph-raising pneumatic circuit interlock box, and the first electric grounding key corresponds to the first electric grounding key lock cylinder; a second electric grounding key lock cylinder is arranged on the second pantograph-raising pneumatic circuit interlock box, and the second electric grounding key corresponds to the second electric grounding key lock cylinder;
a first pneumatic circuit lock cylinder is arranged on the first pantograph-raising pneumatic circuit interlock box, and the first pneumatic circuit key corresponds to the first pneumatic circuit lock cylinder; a second pneumatic circuit lock cylinder is arranged on the second pantograph-raising pneumatic circuit interlock box, and the second pneumatic circuit key corresponds to the second pneumatic circuit lock cylinder; and
a first three-way valve corresponding to the first three-way valve handle is arranged on the first pantograph-raising pneumatic circuit interlock box, and a second three-way valve corresponding to the second three-way valve handle is arranged on the second pantograph-raising pneumatic circuit interlock box.

3. The high-voltage interlock device for the railway vehicle according to claim 2, wherein the locking device is provided with a first pneumatic circuit lock cylinder, a second pneumatic circuit lock cylinder, a plurality of converter box lock cylinders, a plurality of converter box keys corresponding to the plurality of converter box lock cylinders, a plurality of power supply box lock cylinders, and a plurality of power supply box keys corresponding to the plurality of power supply box lock cylinders.

4. The high-voltage interlock device for the railway vehicle according to claim 2, wherein contacts of the first electric grounding key are respectively connected to a closing circuit of a first grounding switch, a power supply circuit of a first pantograph and a closing circuit of a first high-voltage circuit breaker; contacts of the second electric grounding key are respectively connected to a closing circuit of a second grounding switch, a power supply circuit of a second pantograph and a closing circuit of a second high-voltage circuit breaker.

5. The high-voltage interlock device for the railway vehicle according to claim 3, wherein the first electric grounding key, the second electric grounding key, the first pneumatic circuit key, the second pneumatic circuit key, the converter box keys and the power supply box keys are set to different colors, and the first electric grounding key and the second electric grounding key are of the same color, the first pneumatic circuit key and the second pneumatic circuit key are of the same color, the plurality of converter box keys are of the same color, and the plurality of power supply box keys are of the same color.

6. A high-voltage interlock method for a railway vehicle, **characterized in that** the method is applied to the high-voltage interlock device for the railway vehicle according to any one of claims 1-5, comprising following steps:
S1: turning the electric grounding key switch on the cab fault switch panel to the lock position, so as to close the grounding switch, cut off a pantograph power supply circuit and a main circuit breaker circuit, ensuring that the electric grounding key switch is pulled out;
S2: turning the three-way valve handle of the pantograph pneumatic circuit interlock box to the pneumatic circuit cut-off position, so as to cut off the pantograph air supply circuit, ensuring that the pneumatic circuit key is pulled out; and
S3: unlocking through a key of the locking device, ensuring that keys of the converter box and the power supply box are pulled out.

7. The high-voltage interlock method for the railway vehicle according to claim 6, wherein S1 comprises:
rotating the first electric grounding key and the second electric grounding key to the lock position, so that both the first grounding switch and the second grounding switch are closed, power supply circuits of the first pantograph and the second pantograph are both disconnected, and circuits of the first high-voltage circuit breaker and the second high-voltage circuit breaker are both disconnected; and
pulling out the first electric grounding key and the second electric grounding key.

8. The high-voltage interlock method for the railway vehicle according to claim 7, wherein S2 comprises:
inserting the first electric grounding key and the second electric grounding key into the first electric grounding key lock cylinder and the second electric grounding key lock cylinder respectively;
rotating both the first three-way valve handle and the second three-way valve handle to the pneumatic circuit cut-off position, so that air supply circuits of the first pantograph and the second pantograph are disconnected; and
pulling out the first pneumatic circuit key and the second pneumatic circuit key.

9. The high-voltage interlock method for the railway vehicle according to claim 8, wherein S3 comprises:
inserting the first pneumatic circuit key into the first pneumatic circuit lock cylinder, and inserting the second pneumatic circuit key into the second pneumatic circuit lock cylinder at the same time, and pulling out the converter box keys and the power supply box keys.

10. A railway vehicle, **characterized by** comprising the high-voltage interlock device for the railway vehicle according to any one of claims 1-5.
